# EUROPÄISCHE PATENTANMELDUNG

(11) **EP 1 642 756 A1**
(43) Veröffentlichungstag der Anmeldung: **05.04.2006**
(21) Anmeldenummer: 05021135.8
(22) Anmeldetag: 28.09.2005
(51) Int. Cl.: B60J 7/12

(54) **Vorrichtung zum Spannen oder zum Verlagern von wenigstens einem Verdeckflächenelement**

(30) Priorität: 29.09.2004 DE 102004047910
(71) Anmelder: PARAT Automotive Schönenbach GmbH + Co. KG, 42897 Remscheid (DE)
(72) Erfinder: Schönenbach, Heinz, 42897 Remscheid (DE)
(74) Vertreter: Ostriga, Sonnet, Wirths & Roche

(57) **Zusammenfassung**

Die Erfindung betrifft eine Vorrichtung zum Spannen oder zum Verlagern von wenigstens einem Verdeckflächenelement (13), insbesondere eines Cabriolet-Verdecks eines Kfz relativ zu wenigstens einem Gestängeelement, mit wenigstens einem Zugmittel (11a, 11 b, 37)), insbesondere einem Zugseil, welches an dem Gestängeelement (20) und I oder an dem Verdeckflächenelement (13) befestigbar ist und hierzu an wenigstens einem Ende einen Verbinder (31, 51) aufweist, welches mit einem Gegenverbinder (12a, 12b, 12c, 50) kooperiert, das mittelbar oder unmittelbar fest an dem Verdeckflächenelement (13) oder an dem Gestängeetement (20) angebracht ist.

Aufgabe der Erfindung ist es, eine Vorrichtung zum Spannen und Verlagern für Verdeckflächenelemente zu schaffen, welche eine einfachere Montage der Zugmittel an dem Verdeckflächenelement ermöglicht.

Die Aufgabe wird gelöst, indem der Verbinder (31, 51) und der Gegenverbinder (12a, 12b, 12c, 50) lösbar miteinander in Eingriff bringbar sind.

## Beschreibung

Die Erfindung betrifft eine Vorrichtung zum Spannen oder zum Verlagern von wenigstens einem Verdeckflächenelement, gemäß dem Oberbegriff des Anspruchs 1.

Verdeckgestänge, beispielsweise von Kraftfahrzeug-Klappverdecken, können aus einer Vielzahl von Gestängeelementen, wie z.B. einarmigen oder zweiarmigen Hebeln und Kniehebeln bestehen. Diese sind mittels ebener Gelenke verbunden und ermöglichen eine Öffnungs- sowie eine Schließbewegung des Klappverdecks. Aufgrund der relativ großen Bewegungshübe der Gestängeelemente ist es jedoch schwierig, Verdeckflächenelemente, wie beispielsweise den Innenhimmel eines Fahrzeugverdecks, an diesen anzubringen. Besonders große Relativbewegungen treten im Bereich der karosserieseitigen C-Säule auf, wo sich das mit Kniehebeln versehene Spanngestänge des Fahrzeugverdecks befindet. Aus diesem Grunde werden Vorrichtungen mit biegeschlaffen Zugmitteln verwendet, die an den Gestängeelementen und den Verdeckflächenelementen befestigt sind.

Eine solche Vorrichtung ist aus der DE 40 31 270 C1 der Anmelderin bekannt. Ein Zugmittel ist hier mit einem Ende an einem Gestängeelement befestigt, durch Umlenkgleitösen am Spanngestänge und an einem Spriegel geführt und mit dem anderen Ende fest am Verdeckflächenelement angebracht. Ein weiteres Zugmittel ist an einem Ende fest mit dem Verdeckflächenelement verbunden, durch Umlenkgleitösen an einem Gestängeelement und am Spriegel geführt und auch am anderen Ende fest am Vercleckflächenelement angebracht.

Die Befestigung am Verdeckflächenelement erfolgt gemäß offenkundiger Vorbenutzung der Anmelderin unmittelbar beispielsweise mittels einer Nietverbindung oder mittelbar an einer Leiste. Im letzteren Fall kann das Zugmittel mit der Leiste vernietet werden oder aber das Ende des Zugmittels wird durch eine Öffnung in der Leiste geführt und anschließend so verplombt, dass es die Öffnung nicht mehr passieren kann. Diese Befestigung der Plombe muss daher während der Montage erfolgen und macht die Montage der Zugmittel sehr aufwendig.

Muss das Zugmittel nachträglich vom Verdeckflächenelement demontiert werden, so kann das nur durch ein Abtrennen des verplombten Endes und somit durch Zerstörung des Zugmittels erfolgen.

Die Aufgabe der Erfindung besteht ausgehend von der oben erwähnten offenkundigen Vorbenutzung darin, eine Vorrichtung zum Spannen oder zum Verlagern von wenigstens einem Verdeckflächenelement zu schaffen, die eine einfachere Montage der Vorrichtung ermöglicht.

Die Erfindung löst diese Aufgabe mit den Merkmalen des Anspruches 1, insbesondere mit den Merkmalen des Kennzeichenteils, wonach der Verbinder und der Gegenverbinder lösbar miteinander in Eingriff bringbar sind.

Das Prinzip der Erfindung besteht daher im Wesentlichen darin, dass an einem oder an beiden Endbereichen des Zugmittels ein Verbinder angebracht wird, welcher im montierten Zustand mit einem an dem Verdeckflächenelement befestigten Gegenverbinder in Eingriff steht und dass diese Verbindung lösbar und wieder befestigbar ist.

Ein Verdeckflächenelement im Sinne der Erfindung ist beispielsweise ein Abschnitt des Innenhimmels eines Fahrzeugverdecks, wobei es unerheblich ist, aus welchem Material das Fahrzeugverdeck an einer Außenseite gefertigt ist. Alternativ kommt als Verdeckflächenelement aber auch der Außenbezug eines Fahrzeugverdecks oder auch ein anderer Bezug bzw. ein anderes Verdeck in Frage, das mittels Gestängeelementen gespannt oder verlagert wird.

Das Zugmittel ist erfindungsgemäß an wenigstens einem Gestängeelement und / oder an dem Verdeckflächenelement befestigbar. Das bedeutet einerseits, dass das Zugmittel mit einem Ende am Gestängeelement und mit einem anderen Ende am Verdeckflächenelement befestigt ist. Alternativ ist das Zugmittel mit beiden Enden am Verdeckflächenelement befestigt. Das Zugmittel kann beispielsweise zwischen seinen Enden mittels Umlenkgleitösen an wenigstens einem Gestängeelement oder am Verdeckflächenelement gehalten sein.

Das erfindungsgemäße Zugmittel weist an wenigstens einem Ende einen Verbinder auf, der dem Zugmittel fest zugeordnet ist. Es ist also möglich, das ein Verbinder am Ende des Zugmittels fest angebracht ist oder aber der Verbinder vom Ende des Zugmittels selbst gebildet ist. Im letzteren Fall kann eine Verdickung des Zugmittels oder ein Knoten den Verbinder bilden. Der Verbinder kann auch von dem bloßen Ende des Zugmittels gebildet sein, welches dann beispielsweise mit einer entsprechenden Klemmvorrichtung als Gegenverbinder zusammenwirken würde. Der Verbinder ist somit vorzugsweise ein gesondertes Teil, das am Ende des Zugmittels befestigt ist. Alternativ kann aber auch das Ende des Zugmittels selbst den Verbinder darstellen. Es sei noch angemerkt, dass auch mehrere Zugmittel vorgesehen sein können.

Die erfindungsgemäße Vorrichtung hat den wesentlichen Vorteil, dass nunmehr das Zugmittel an dem Verdeckflächenelement oder am Gestängeelement nicht nur sehr einfach montiert sondern auch auf einfache Weise nachträglich gelöst und anschließend wieder befestigt werden kann. Ein solches Lösen und Wiederbefestigen kann beispielsweise bei Fahrzeugverdecken von Vorteil sein, um eine Korrekturmöglichkeit vorzusehen, wenn das Zugmittel am Verdeckgestänge falsch verlegt wurde. Außerdem kann eine vollständige Vormontage des Innenhimmels erfolgen. Bei der Endmontage kann der erfindungsgemäß vormontierte Innenhimmel auf einfache Weise montiert werden, indem der Innenhimmel teilweise wieder von Gestängeelementen demontiert anschließend wiederbefestigt wird.

Die erfindungsgemäße Vorrichtung gewährleistet eine feste Verbindung zwischen Verbinder und Gegenverbinder zur Übertragung von Zugkräften vom Gestängeelement auf das Verdeckflächenelement. Darüber hinaus sind die Einzelteile der Vorrichtung leicht herstellbar und teilweise auch maschinell vormontierbar, was beim Stand der Technik nicht der Fall war.

Gemäß einer Ausgestaltung der Erfindung wirken der Verbinder und der Gegenverbinder nach Art einer Steckverbindung zusammen. Das kann eine Verbindung sein, bei der der Verbinder in eine Lagerposition des Gegenverbinders geführt wird und aus dieser Position - möglicherweise unter Zuhilfenahme eines Werkzeugs - im Bedarfsfall wieder entfernt werden kann. Eine solche Steckverbindung gewährt den Vorteil der leichten Lös- und Wiederbefestigbarkeit und bietet Sicherheit gegen unbeabsichtigtes Lösen.

Gemäß einer weiteren Ausgestaltung der Erfindung weist der Verbinder ein Ankerelement und der Gegenverbinder ein Widerlager für das Ankerelement auf. Bei dieser Verbindung liegen die Ankerflächen an den Widerlagerflächen an. Ein solches Zusammenwirken von Ankerelement und Widerlager stellt eine feste Verbindung zwischen Zugmittel und Verdeckflächenelement dar. Als Ankerelement kommt hier beispielsweise ein Element infrage, das auf das Ende des Zugmittels aufgepresst wird. Auch eine Verdickung am Ende des Zugmittels kann das Ankerelement darstellen. Als Widerlager kommen beispielsweise Wandbereiche des Gegenverbinders oder aber eine Vorrichtung infrage, bei der das Ende des Zugmittels verklemmt wird. Zudem ist die Verbindung einfach herstell- und montierbar.

Gemäß einer weiteren Ausgestaltung der Erfindung weist der Gegenverbinder wenigstens eine tunnel- oder fensterartige Öffnung auf, welche von einem Ende des Zugmittels oder vom Verbinder durchgreifbar ist. Diese Ausführungsform implementiert die Widerlagerfunktion auf besonders einfache Weise in den Gegenverbinder. Die Montage kann ebenfalls sehr einfach erfolgen, indem das Ankerelement mit einer bestimmten Ausrichtung oder einem bestimmten Montagezustand durch die tunnel- oder fensterartige Öffnung im Gegenverbinder hindurch geführt und anschließend an die Wandfläche des Gegenverbinders angelegt wird.

Einer weiteren Ausgestaltung der Erfindung gemäß weist die Öffnung einen Durchmesser auf, wobei eine Länge des Verbinders länger ist als der Durchmesser. Die Öffnung kann kreisrund sein, dann gibt es lediglich einen Durchmesser. Ist die Öffnung rechteckig oder hat eine andere Form, kann die Länge der Plombe größer sein als der größte Durchmesser der Öffnung. In diesem Fall kann die Plombe nur vom Gegenverbinder getrennt werden, wenn ihre Längsachse parallel zur Längsachse der Öffnung ausgerichtet wird. Alternativ ist es aber auch möglich, dass die Länge der Plombe größer ist als ein Durchmesser, der nicht der größte Durchmesser ist. Zur Befestigung wird die Plombe dann an einen Bereich des Gegenverbinders angelegt, bei dem der Durchmesser der Öffnung kleiner ist als die Länge der Plombe.

Gemäß einer weiteren Ausgestaltung der Erfindung bilden der Öffnung benachbarte und zum Verbinder weisende Wandflächen des Gegenverbinders das Widerlager. Das Widerlager kann somit auf besonders einfache Weise hergestellt werden.

Gemäß einer weiteren Ausgestaltung der Erfindung ist der Verbinder von einer fest mit dem Zugmittel verbundenen Plombe gebildet. Eine solche Plombe, beispielsweise aus einem Metall wie Aluminium gefertigt, lässt sich maschinell durch Verpressen sicher am Zugmittel befestigen und stellt eine preiswerte Variante des Verbinders dar.

Gemäß einer weiteren Ausgestaltung der Erfindung ist eine Längsachse der Plombe im wesentlichen senkrecht zu einer Längsachse des Zugmittels angeordnet. Auf diese Weise werden Anlageflächen an der Plombe gebildet, weiche mit Widerlagerflächen des Gegenverbinders korrespondieren können. Wird das Zugmittel zur Montage des Verbinders am Gegenverbinder seitlich an die Plombe angelegt, richten Rückstellkräfte im Zugmittel die Plombe nach der Montage wieder so aus, dass sie senkrecht zur Längsachse des Zugmittels steht.

Einer weiteren Ausgestaltung der Erfindung gemäß weist der Gegenverbinder wenigstens einen ersten Bereich zur Befestigung des Verbinders und einen zweiten Bereich zur Befestigung am Verdeckflächenelement oder am Gestängeelement auf. Die Befestigung des Gegenverbinders am Verdeckflächenelement kann dabei unmittelbar oder mittelbar erfolgen.

Einer weiteren Ausgestaltung der Erfindung gemäß ist der zweite Bereich des Gegenverbinders von einem plattenförmigen Element oder einem Leistenelement gebildet. Mit einem solchen plattenförmigen Element oder Leistenelement ist eine Befestigung des Gegenverbinders am Verdeckflächenelement durch Verkleben, Vernähen oder Kaschieren leicht möglich. Es kommen aber auch weitere Möglichkeiten der Ausgestaltung infrage. So kann der Befestigungsbereich auch als biegeschlaffe Fläche ausgebildet sein, welche ein Annähen am Verdeckflächenelement ermöglicht.

Gemäß einer weiteren Ausgestaltung der Erfindung ist der erste Bereich des Gegenverbinders einstückig stoffschlüssig mit dem zweiten Bereich verbunden. Dabei können die Befestigungsbereiche stoffschlüssig miteinander verklebt oder als einstückiges Formteil hergestellt sein. Diese Ausgestaltung der Erfindung ermöglicht somit eine einfache Herstellung des Gegenverbinders.

Einer weiteren Ausgestaltung der Erfindung gemäß ist der Gegenverbinder wenigstens zweiteilig ausgebildet, wobei der erste Bereich lösbar an dem zweiten Bereich gehalten ist. Diese Ausführungsform ermöglicht es, einen Bereich des Gegenverbinders zunächst am Zugmittel zu befestigen und den anderen Bereich am Verdeckflächenelement anzubringen und anschließend beide Bereiche miteinander zu verbinden. Ein Lösen ist problemlos durch Trennen der Verbindung möglich.

Gemäß einer weiteren Ausgestaltung der Erfindung ist eine Rastnase an einem der Bereiche angeordnet, welche formschlüssig in eine Ausnehmung des anderen Bereichs eingreift. Diese Ausgestaltung der Erfindung gewährt den Vorteil der einfachen Herstellbarkeit sowie einer einfachen Lös- und Wiederbefestigbarkeit.

Eine weitere Ausgestaltung der Erfindung sieht vor, dass wenigstens zwei Gegenverbinder miteinander verbunden sind. Mehrere Gegenverbinder lassen sich dann kostengünstig als einstückiges Formteil herstellen. Sie können beispielsweise leistenartig miteinander verbunden sein. An der Leiste können dann das Verdeckflächenelement sowie mehrere Verbinder befestigt werden. Es können beispielsweise auch Verbinder unterschiedlicher Zugmittel an der Leiste befestigt werden.

Einer weiteren Ausgestaltung der Erfindung gemäß ist der Gegenverbinder zur Urnlenkung des Zugmittels mit einem Klemmsitz versehen. Unabhängig von der Befestigung zwischen Verbinder und Gegenverbinder ist das Zugmittel bei dieser Ausführungsform in Belastungsrichtung umgelenkt und wird in dieser Position gehalten. Diese Ausgestaltung der Erfindung hat den zusätzlichen Vorteil, dass der Verbinder durch den Klemmsitz des Zugmittels an dem Widerlager des Gegenverbinders gehalten wird.

Gemäß einer weiteren Ausgestaltung der Erfindung weist der Klemmsitz einen V-förmig divergierenden Öffnungsbereich auf. Mit Hilfe dieser Ausführungsform kann das Zugmittel auf besonders einfache Weise im Klemmsitz montiert werden, indem es nach der Befestigung am Gegenverbinder über den V-förmig divergierenden Ȯffnungsbereich in den Klemmsitz geführt wird. Der Öffnungsbereich kann dabei vor dem Klemmsitz eine Verengung aufweisen, durch welche das Zugmittel nur mit einem gewissen Kraftaufwand bewegt werden kann, so dass es sich nicht unbeabsichtigt lösen kann.

Weitere Vorteile der Erfindung ergeben sich aus den nicht zitierten Unteransprüchen sowie anhand der nachfolgenden Beschreibung von in den Zeichnungen dargestellten Ausführungsbeispielen. Es zeigen:
Fig. 1 eine abgebrochene schematische Ansicht eines geschlossenen bzw. gespannten Klappverdecks,
Fig. 2 eine Draufsicht auf eine erste Ausführungsform der erfindungsgemäßen Vorrichtung gemäß Teilkreis II in Fig. 1 in vergrößerter Darstellung,
Fig. 3 eine perspektivische Schrägansicht der erfindungsgemäßen Vorrichtung gemäß Fig. 2,
Fig. 4 eine Seitenansicht der Vorrichtung gem. Ansichtspfeil IV in Fig. 2
Fig. 5 eine teilgeschnittene Darstellung der Vorrichtung gemäß Schnittlinie V-V in Fig. 4,
Fig. 6 eine perspektivische Schrägansicht einer weiteren Ausführungsform der Vorrichtung,
Fig. 7 eine Schnittdarstellung der Vorrichtung gemäß Schnittlinie VII-VII in Fig. 6 und
Fig. 8 eine Schnittdarstellung der Vorrichtung gemäß Schnittlinie VIII-VIII in Fig. 7.

In den Zeichnungen ist eine Vorrichtung zum Spannen und zum Verlagern von Verdeckflächenelementen insgesamt mit der Bezugsziffer 10 bezeichnet. Gleiche Bezugsziffern auch unter Ergänzung von kleinen Buchstaben in den unterschiedlichen Figuren bezeichnen entsprechende Teile.

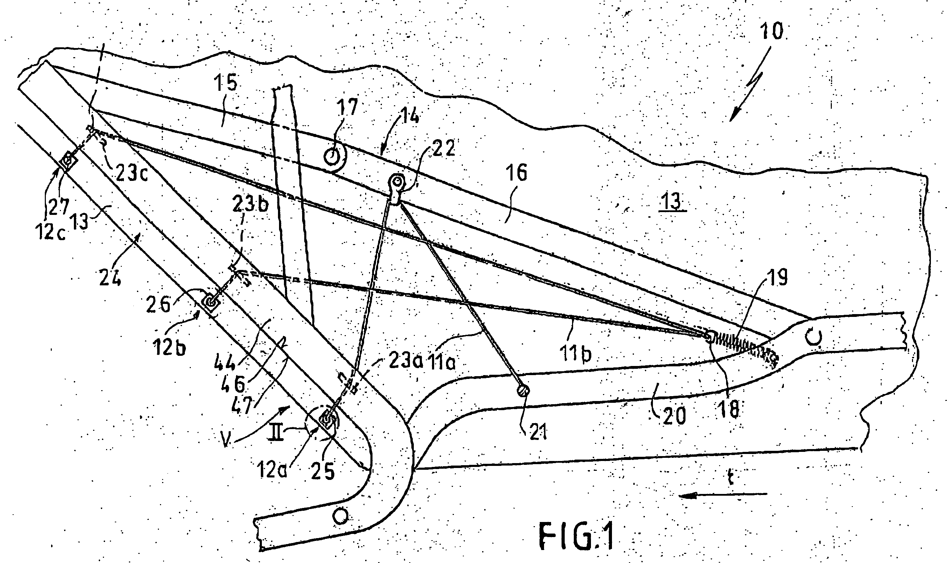

In Fig. 1 ist die Vorrichtung 10 anhand eines Teils eines Klappverdecks dargestellt, wie es bei Cabriolets zum Einsatz kommt. Fig. 1 zeigt einen in Fahrtrichtung t linken Seitenbereich des Klappverdecks, welcher sich in der Nähe der karosserieseitigen C-Säule befindet. Das Klappverdeck weist ein Verdeckgestänge V auf, welches von einem Innenhimmel 13 untergriffen ist. Ein Außenbezug des Klappverdecks ist nicht dargestellt. Das Verdeckgestänge V ist mit einem Kniehebelgestänge 14 versehen, das zwei Kniehebellaschen 15 und 16 aufweist, welche über ein ebenes Gelenk 17 miteinander in Verbindung stehen. Die Kniehebellasche 16 ist zudem an einem Spannbügel 20 angelenkt, während die Kniehebeilasche 15 an einem einfaltbaren Spriegel 44 angelenkt ist.

Aufgrund der beim Öffnen des Verdecks teilweise sehr großen Bewegungshübe der Gestängeelemente, wie beispielsweise des Kniehebelgestänges 14, kann der Innenhimmel 13 nicht direkt am Verdeckgestänge V befestigt werden. Um den Spannvorgang des Innenhimmels 13 zu ermöglichen sind deshalb Zugkordeln 11a und 11b vorgesehen, über die das Verdeckgestänge V mit dem Innenhimmel 13 verbunden ist. Anstelle textiler Zugkordeln 11a, 11b kommen auch solche aus Kunststoff, Metall oder weiteren Materialien in Betracht. Die Zugkordel 11a ist an einem Ende mittels einer Schraubverbindung 21 an dem Spannbügel 20 gehalten, ferner durch eine Umtenkgleitöse 22 an der Kniehebellasche 16 sowie durch eine Umlenkgleitöse 23a an dem Spriegel 44 geführt und mit ihrem anderen Ende an einem Gegenverbinder 12a auf später näher zu erläuternde Weise befestigt. Der Gegenverbinder 12a ist Teil eines als Kunststoff-Spritzgussteil ausgebildeten Leistenelements 24, das außer dem Gegenverbinder 12a durch weitere Gegenverbinder 12b und 12c gebildet ist und auf welchem der Innenhimmel 13 aufkaschiert ist. Die Gegenverbinder 12a, 12b und 12c weisen Befestigungsdome 25, 26 und 27 auf, deren Aufbau erst später näher erläutert wird.

Die Zugkordel 11b ist durch eine Umlenkgleitöse 18 einer Feder 19 sowie durch weitere Umlenkgleitösen 23b und 23c geführt, welche am Spriegel 44 angeordnet sind und mit ihren Enden an den Gegenverbindern 12b und 12c angebracht. Die Feder 19 ist ihrerseits an dem Spannbügel 20 befestigt, der Teil des Verdeckgestänges V ist.

In Fig. 1 befindet sich das Klappverdeck in seiner aufgespannten Position. Die Länge der Zugkordein 11a und 11b ist so bemessen, dass sie das Leistenelement 24 mit dem daran befestigten Innenhimmel 13 gegen den Haltewinkel 44 ziehen. Auf dem Leistenelement 24 ist der Innenhimmel 13 beispielsweise aufgeklebt. Eine Anschlagkante 46 des Leistenalements 24 liegt im aufgespannten Zustand des Verdeckgestänges V an einer Anschlagfläche 47 des Haltewinkels 44 an.

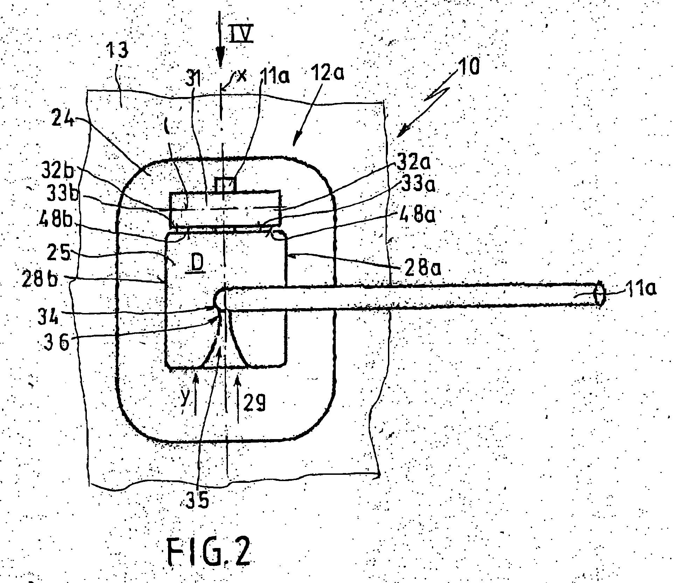

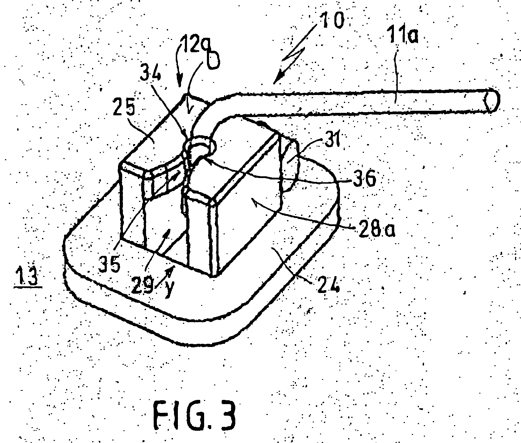

Die Befestigung des Endes der Zugkordel 11a an dem Gegenverbinder 12a ist beispielhaft in den Fig. 2 bis 5 dargestellt. Daraus wird deutlich, dass der Gegenverbinder 12a einen Befestigungsdom 25 aufweist. Die Zugkordel 11b ist gemäß Fig. 1 mit einem Ende an dem Gegenverbinder 12b und mit dem anderen Ende an dem Gegenverbinder 12c befestigt. Die Gegenverbinder 12b und 12c sind ebenfalls mit Befestigungsdomen 26 und 27 versehen. Die Befestigung der Zugkordel 11b an den Gegenverbindern 12b und 12c erfolgt auf die gleiche, im Folgenden zu erläuternde Weise, wie die Befestigung der Zugkordel 11a an dem Befestigungsdom 25.

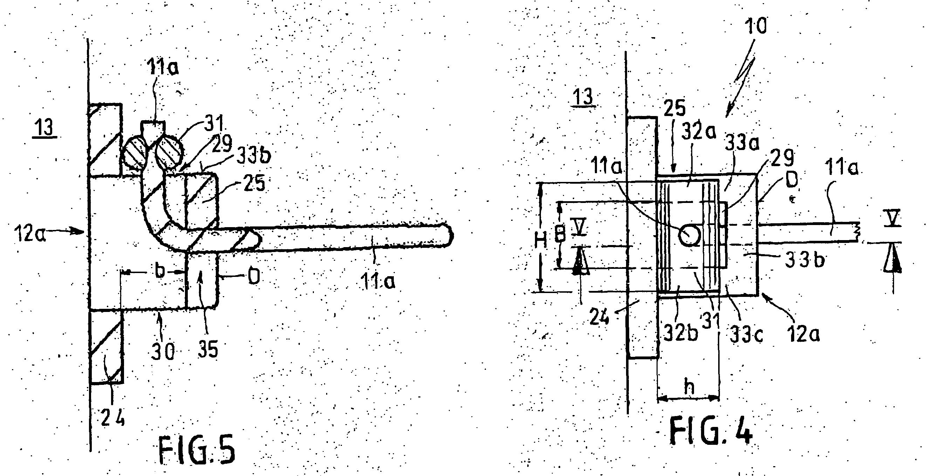

In den Fig. 2 bis 5 ist der Gegenverbinder 12a als Ausbruch aus dem Leistenelement 24 dargestellt, welches gemäß Fig. 1 gemeinsam von den Gegenverbindern 12a, 12b und 12c gebildet wird. Entgegen der Darstellung in den Fig. 2 bis 5 ist der Gegenverbinder 12a also kein separates Teil, sondern Teil der Leiste 24. Der Gegenverbinder 12a könnte aber ebenso ein separates Teil sein. Der Befestigungsdom 25 weist gemäß Fig. 2 Seitenwände 28a und 28b und eine Dachwand D auf. Durch die Wände 28a, 28b und D wird eine tunnelartige Öffnung 29 gebildet, wie am besten in Fig. 5 gezeigt. Als Verbinder ist auf die Zugkordel 11a eine Metallplombe 31 aufgepresst. Das Aufpressen der Metallplombe 31 erfolgt maschinell bereits vor der Montage der Zugkordeln 11a und 11b am Verdeckgestänge V bzw. am Verdeckflächenelement. Die Länge H der Metallplombe 31 in Richtung einer Längsachse I (s. Fig. 2) ist wesentlich größer als die Höhe h senkrecht dazu. Eine Höhe b und Breite B der Öffnung 29 (siehe Fig. 4 und 5) sind so bemessen, dass die Metallplombe 31 nur hindurch geführt werden kann, wenn ihre Längsachse I im wesentlichen parallel zu einer Längsachse x der Öffnung 29 ausgerichtet ist. Die Länge H der Plombe 31 ist also größer als die Breite B bzw. die Höhe b der Öffnung 29. Die Zugkordel 11a wird wie folgt an dem Gegenverbinder 12a befestigt:

Zur Montage der Zugkordel 11a am Gegenverbinder 12a wird die Längsachse I der Plombe 31 parallel zu einer in Fig. 2 dargestellten Achse x ausgerichtet, wobei die Zugkordel 11a seitlich an die Plombe 31 angelegt und die Plombe 31 mittels eines nicht dargestellten Werkzeugstiftes in Einsteckrichtung y durch die Öffnung 29 geführt wird. Nach dem Austreten-aus der Öffnung 29 richten Rückstellkräfte die Plombe 31 so auf, dass sie im Wesentlichen senkrecht zu einer Längsachse der Zugkordel 11a steht. Wird jetzt eine entgegen der Einsteckrichtung y wirkende Kraft auf die Zugkordel 11a ausgeübt, welche die Öffnung 29 durchgreift, legen sich Flanken 32a und 32b mit Anlageflächen 48a und 48b der Metallplombe 31 an wenigstens zwei der Randbereiche 33a, 33b oder 33c des Befestigungsdoms 25 an

Ist die Längsachse I gemäß Fig. 2 rechtwinklig zur Achse x ausgerichtet, passt die Plombe> 31 nicht durch die Öffnung 29 (siehe Fig. 4), da die Länge H der Plombe 31 größer ist als die Breite B und die Höhe b der Öffnung 29. Da die Längsachse I der Plombe 31 sich aufgrund von Rückstellkräften der Zugkordel 11a nicht selbsttätig parallel zur Achse x ausrichten kann, besteht darüber hinaus keine Gefahr, dass die Plombe 31 die Öffnung 29 unbeabsichtigt passiert. Zudem ist die Öffnung 29 derart bemessen, dass die Plombe 31 nur mittels eines nicht dargestellten Werkzeugstiftes hindurchgesteckt werden kann. Die Vorrichtung 10 gewährleistet somit eine sichere Verbindung zwischen dem lnnenhimmel 13 und dem Verdeckgestänge V.

Um zusätzlich ein ungewolltes Lösen der Zugkordel 11a vom Befestigungsdom 25 zu verhindern und vomehmlich um die Zugkordel 11a in Belastungsrichtung umzulenken, ist ein Klemmsitz 34 mit einem V-förmig divergierenden Öffnungsbereich 35 an dem Befestigungsdom 25 angeordnet (siehe Fig. 2). Der Öffnungsbereich 35 weist vor dem Klemmsitz 34 einen Engpass 36 auf, so dass die Zugkordel 11a nur mit gewissem Kraftaufwand axial in dem Klemmsitz 34 bewegt oder radial aus Letzterem entfernt werden kann. Auf diese Weise kann sich die Zugkordel 18 nicht ungewollt aus dem Klemmsitz 34 herauslösen. Zudem werden die Flanken 32 der Plombe 31 immer an den als Widerlager dienenden Randbereichen 33a, 33b oder 33c gehalten (siehe Fig. 4), so dass die Haltefunktion zuverlässig gewährleistet ist.

Zur Demontage der Vorrichtung 10 kann das Ende der Zugkordel 11a von dem Befestigungsdom 25 gelöst werden, indem die Längsachse I der Plombe wieder parallel zur Achse x ausgerichtet wird, so dass die Plombe 31 mittels eines Werkzeugstiftes unter Aufbringung von Presskräften durch die Öffnung 29 hindurch geführt werden kann.

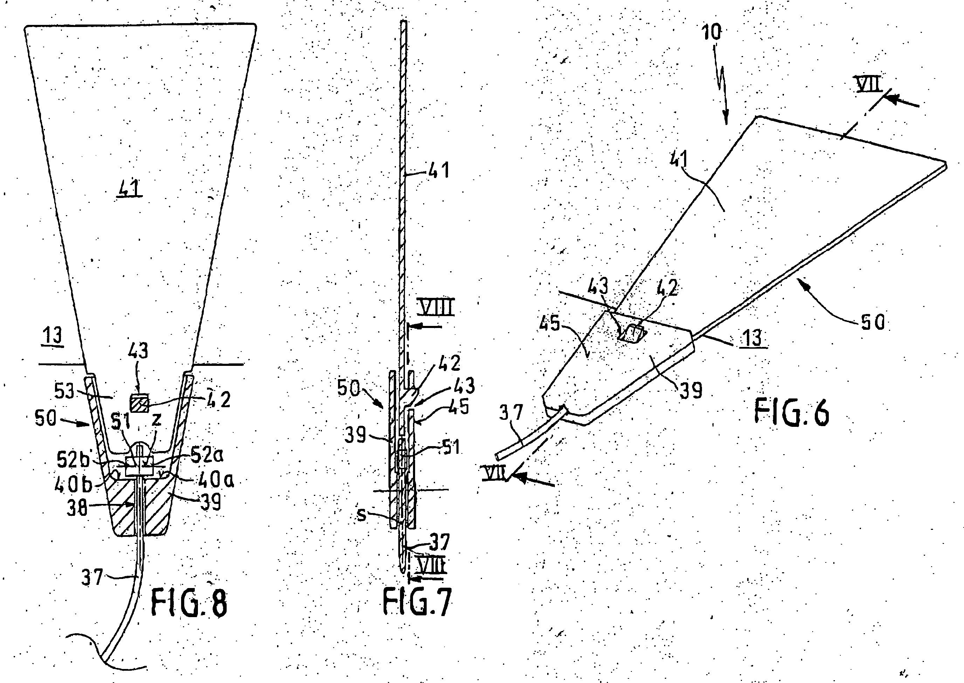

Eine weitere Ausführungsform der erfindungsgemäßen Vorrichtung ist in den Figuren 6 bis 8 dargestellt. Die mit einer Plombe 51 als Verbinderteil versehene Zugkordel 37 durchgreift gemäß Fig. 8 eine kreiszylindrische Öffnung 38 eines Gegenverbinders 50, der von einem Befestigungselement 39 zur Befestigung der Zugkordel 37 und einer Kunststoffplatte 41 gebildet ist. Die Kunststoffplatte 41 dient der Befestigung am Innenhimmel 13.

Flanken 52a, 52b der Plombe 51 liegen an Widerlagerflächen 40a, 40b an, die von einer Ausnehmung 49 im Befestigungselement 39 gebildet werden. Die Ausnehmung 49 nimmt einem Bereich 53 der Kunststoffplatte auf, der mit einer Rastnase 42 versehen ist. Die Rastnase 42 greift in eine Öffnung 43 im Befestigungselement 39, wodurch die Kunststoffplatte 41 fest mit dem Befestigungselement 39 verbunden ist. Die kreiszylindrische Öffnung 38 ist entgegen der Darstellung in den Figuren 6 bis 8 so bemessen, dass die Plombe 51 sie zur Montage oder Demontage passieren kann, wenn eine Längsachse z der Plombe parallel zu einer Längsachse s (siehe Fig. 7) der Öffnung 38 ausgerichtet ist.

Die Montage erfolgt, indem die Längsachse z der Plombe 51 parallel zu einer Längsachse s der Öffnung 38 ausgerichtet und die Plombe anschließend mittels des Werkzeugstiftes durch die Öffnung 38 gedrückt wird. Steht die Längsachse I senkrecht zur Längsachse s der Öffnung 38, kann die Plombe 51 die Öffnung 38 nicht passieren.

Mit dem in den Fig. 6 bis 8 dargestellten Ausführungsbeispiel ist es möglich, zunächst die Kunststoffplatte 41 beispielsweise durch Vernähen. Verkleben oder Aufkaschieren am Innenhimmel 13 zu befestigen und die Zugkordel 11a, nachdem sie durch nicht dargestellte Umlenkgleitösen gezogen wurde, separat mit Hilfe der Plombe 51 als Verbinder an dem Befestigungselement 39 anzubringen. Anschließend kann das Befestigungselement 39 mit der Kunststoffplatte 41 durch Verrasten der Rastnase 42 in der Ausnehmung 43 verbunden werden. Später ist ein Trennen der Zugkordel 37 vom Innenhimmel 13 auf einfache Weise durch Lösen der Rastverbindung möglich.

Es sei noch angemerkt, dass obwohl in den Zeichnungen die erfindungsgemäße Vorrichtung 10 lediglich als Spannvorrichtung ausgebildet ist, die Vorrichtung 10 aber auch zum Verlagern von Verdeckflächenelementen, beispielsweise von Teilen eines Innenhimmels 13, verwendbar ist.

## Patentansprüche

1. Vorrichtung zum Spannen oder zum Verlagern von wenigstens einem Verdeckflächenelement (13), insbesondere eines KFZ-Cabriolet-Verdecks, relativ zu wenigstens einem Gestängeelement, mit wenigstens einem Zugmittel (11 a. 11b, 37), insbesondere einem Zugseil, weiches an dem Gestängeelement (20) und / oder an dem Verdeckflächenelement (13) befestigbar ist und hierzu an wenigstens einem Ende einen Verbinder (31, 51) aufweist, welcher mit einem Gegenverbinder (12a, 12b, 12c, 50) kooperiert, der mittelbar oder unmittelbar fest an dem Verdeckflächenelement (13) oder an dem Gestängeelement (20) angebracht ist, **dadurch gekennzeichnet, dass** der Verbinder (31, 51) und der Gegenverbinder (12a, 12b, 12c, 50) lösbar miteinander in Eingriff bringbar sind.

2. Vorrichtung nach Anspruch 1, **dadurch gekennzeichnet, dass** der Verbinder (31, 51) und der Gegenverbinder (12a, 12b, 12c, 50) nach Art einer Steckverbindung zusammenwirken.

3. Vorrichtung nach Anspruch 1 oder 2, **dadurch gekennzeichnet, dass** der Verbinder ein Ankerelement (31, 51) und der Gegenverbinder (12a, 12b, 12c, 50) ein Widerlager (33a, 33b, 33c, 40a, 40b) für das Ankerelement (31,51) aufweist.

4. Vorrichtung nach einem der Ansprüche 1 bis 3, **dadurch gekennzeichnet, dass** der Gegenverbinder (12a, 12b, 12c, 50) wenigstens eine tunnel- oder fensterartige Öffnung (29, 38) aufweist, welche von einem Ende des Zugmittels (11a, 11b, 37) oder vom Verbinder (31, 51) durchgreifbar ist.

5. Vorrichtung nach Anspruch 4, **dadurch gekennzeichnet, dass** die Öffnung einen Durchmesser (B) aufweist, wobei eine Länge (H) des Verbinders (31, 51) länger ist als der Durchmesser (B).

6. Vorrichtung nach Anspruch 4 oder 5, **dadurch gekennzeichnet, dass** der Öffnung (29, 38) benachbarte und zum Verbinder (31, 51) weisende Wandflächen (33a, 33b, 33c, 40a, 40b) des Gegenverbinders (12a, 12b, 12c, 50) das Widerlager bilden.

7. Vorrichtung nach einem der vorangehenden Ansprüche, **dadurch gekennzeichnet, dass** der Verbinder von einer fest mit dem Zugmittel (11a, 11b, 37) verbundenen Plombe (31, 51) gebildet ist.

8. Vorrichtung nach Anspruch 7, **dadurch gekennzeichnet, dass** eine Längsachse (I) der Plombe (31, 51) im wesentlichen senkrecht zu einer Längsachse des Zugmittels (11a, 11b, 37) angeordnet ist.

9. Vorrichtung nach einem der vorangehenden Ansprüche, **dadurch gekennzeichnet, dass** der Gegenverbinder (12a, 12b, 12c, 50) wenigstens einen ersten Bereich (25, 26, 27, 39) zur Befestigung des Verbinders (31. 51) und einen zweiten Bereich (24, 41) zur Befestigung am Verdeckflächenelement (13) oder am Gestängeelement (20) aufweist.

10. Vorrichtung nach Anspruch 9, **dadurch gekennzeichnet, dass** der zweite Bereich (24, 41) des Gegenverbinders (12a, 12b, 12c) von einem plattenförmigen Element (41) oder einem Leistenelement (24) gebildet ist.

11. Vorrichtung nach Anspruch 9 oder 10, **dadurch gekennzeichnet, dass** der erste Bereich des Gegenverbinders (12a, 12b, 12c) einstückig stoffschlüssig mit dem zweiten Bereich (24) verbunden ist.

12. Vorrichtung nach Anspruch 9 oder 10, **dadurch gekennzeichnet, dass** der Gegenverbinder (50) wenigstens zweiteilig ausgebildet ist, wobei der erste Bereich (39) lösbar an dem zweiten Bereich (41) gehalten ist.

13. Vorrichtung nach Anspruch 12, **dadurch gekennzeichnet, dass** eine Rastnase (42) an einem der Bereiche (41) angeordnet ist, welche formschlüssig in eine Ausnehmung (43) des anderen Bereichs (39) eingreift.

14. Vorrichtung nach einem der vorangehenden Ansprüche, **dadurch gekennzeichnet, dass** wenigstens zwei Gegenverbinder (25, 26, 27) miteinander verbunden sind.

15. Vorrichtung nach einem der vorangehenden Ansprüche, **dadurch gekennzeichnet, dass** der Gegenverbinder (12a, 12b, 12c) zur Umlenkung des Zugmittels (11a, 11b) mit einem Klemmsitz (34) versehen ist.

16. Vorrichtung nach Anspruch 15, **dadurch gekennzeichnet, dass** der Klemmsitz (34) einen V-förmig divergierenden Öffnungsbereich (35) aufweist.
